# EUROPEAN PATENT APPLICATION

(11) **EP 2 704 033 A1**
(43) Date of publication of application: **05.03.2014**
(21) Application number: 13154547.7
(22) Date of filing: 08.02.2013
(51) Int. Cl.: G06F 17/30

(54) **Method, apparatus and system for remote browsing**

(30) Priority: 23.08.2012 KR 20120092227
(71) Applicant: Humax Co., Ltd., Seongnam-si, Gyeonggi-do 463-825 (KR)
(72) Inventor: Yun, Sung Su, 463-874 Gyeonggi-do (KR)
(74) Representative: Vossius & Partner

(57) **Abstract**

The present invention provides a method, apparatus and system for remote browsing, which allows a URL visited by a first browser of a first terminal to be connected through a browser installed in at least one different terminal. A method for remote browsing comprises displaying a list indicating at least one device equipped with a browse function among a plurality of devices connected to a network; selecting a device from the list according to a device selection signal; and i requesting connection to a webpage by using a browser installed in the selected device. Therefore, information received by a mobile device can be played in a better environment without introducing a cumbersome procedure.

## Description

The present invention relates to a method, apparatus and system for remote browsing. More specifically, the present invention relates to a remote browsing technology enabling a second user equipment to browse a webpage corresponding to connection information input through a first user equipment.

The number of wireless Internet users in a mobile environment is rapidly increasing as communication networks supporting wireless Internet are widely deployed and mobile services are diversified. In particular, the advent of smart portable terminals such as smart phones or tablet PCs armed with high performance comparable to personal computers, applications providing variety and convenience, and splendid graphic interface further accelerates the trend. The influence of mobile services on various parts of everyday lives is expected to grow even larger owing to the advantage of mobile services, capable of providing the users with easy-to-use, convenient services without spatial and temporal limitations.

Nevertheless, since mobile terminals such as smart phones try to achieve miniaturization and light weight of devices, resources which can be installed in the device are limited and screen size for information display is relatively small compared with that of a PC monitor. Therefore, it is also true that use of mobile terminals is still inconvenient compared with fixed-type terminals from a standpoint of the user who uses information services through web browsing.

For example, in case the user attempts to play multimedia by connecting to a particular URL (Universal Resource Locator) or connect to a webpage which does not provide a dedicated webpage for mobile devices, the user may get better satisfaction if he or she browses webpages by using a PC which provides a more favorable operating environment rather than using a mobile terminal. In addition, even if dedicated webpages for mobile devices are provided, since key input operation is inherently difficult for mobile terminals, users may want to connect to webpages by using a PC equipped with much convenient key input interfaces.

As can be noticed from the above cases, the user, trying to use a PC to connect to a webpage visited by his or her mobile terminal, may have to type the URL found by a mobile browser into an address window of a PC browser one by one; or copy the URL from the address window of the mobile browser and send the URL as an e-mail and copy the URL included in the e-mail to the address window of the PC browser. The procedure as described above is a task very much cumbersome. Therefore, there are urgent needs for a technology which allows the user employing a different terminal comfortable access to a webpage visited by a particular terminal.

The present invention has been made in an effort to provide a method, apparatus and system for remote browsing, enabling a browser included in at least one different terminal to connect to the URL visited by a first browser of a first terminal.

To solve the technical problem above, the present invention according to one aspect provides a method for remote browsing. The method for remote browsing comprises displaying a list of devices equipped with a browse function among a plurality of devices connected to a network; selecting a device from the list according to a device selection signal; and requesting connection to a webpage by using a browser installed in the selected device.

The requesting connection to a webpage comprises receiving a URL from the user; and transmitting to the selected device a connection request message including the received URL and requesting connection to a webpage corresponding to the URL by using a browser installed in the selected device.

The method for remote browsing further comprises transmitting a discovery request message to devices connected to a network; and receiving response messages including indication of a browse function from each of the devices in response to the discovery request message, where the displaying a list displays based on the response message a list of devices equipped with a browse function.

The response message includes capability information of a browser of a device transmitting the response message. Here, the method for remote browsing further comprises determining based on capability information of the browser whether a device transmitting the response message is capable of displaying a webpage corresponding to the URL; and displaying a list of devices capable of displaying the webpage based on the determination.

The displaying a list comprises receiving a remote browsing request signal; and in response to the remote browsing request signal, displaying a list of devices equipped with the browsing function. Here, the remote browsing request signal is generated when the user presses a means for moving to the webpage for more than a predetermined time period.

Here, the selecting a device selects a predetermined default device in case the device selection signal is not received for more than a predetermined time period. The capability information includes at least one of a webpage display method, information about whether plug-ins are supported, and resolution. The method for remote browsing further comprises receiving information requested by the webpage from the selected device.

To achieve the objective above, the present invention according to one aspect provides an apparatus for remote browsing. The apparatus for remote browsing comprises a display unit displaying a list of devices equipped with a browse function among devices connected to a network; a controller selecting a device from the list according to a device selection signal; and a communication unit requesting connection to a webpage by using a browser installed in the selected device.

Here, the communication unit includes URL received from the user and transmits to the selected device a connection request message requesting connection to a webpage corresponding to the URL by using a browser installed in the selected device.

Also, the communication unit transmits a discovery request message to devices connected to a network and in response to the discovery request message, receives from the devices a response message including information about whether a browse function is supported while the display unit displays based on the response message a list of devices equipped with a browse function.

The response message includes capability information of a browser of a device transmitting the response message. The controller determines based on capability information of the browser whether a device transmitting the response message is capable of displaying a webpage corresponding to the URL and the display unit further displays a list of devices capable of displaying the webpage based on the determination.

The display unit, if the communication unit receives a remote browsing request signal, displays a list of devices equipped with the browse function in response to the remote browsing request signal. Here, the method for remote browsing further includes transmitting the remote browsing request signal to the communication unit in case the user presses a means for moving to the webpage for more than a predetermined time period.

Also, the controller selects a predetermined default device in case the device selection signal is not received for more than a predetermined time period. The capability information includes at least one of a webpage display method, information about whether plug-ins are supported, and resolution. In addition, the communication unit further receives from the selected device information required by the webpage.

To achieve the objective above, the present invention according to one aspect provides a remote browsing system. The remote browsing system comprises a first device transmitting a discovery request message to devices connected to a network and receiving from the devices a response message including indication of a browse function in response to the discovery request message and based on the response message, displaying a list of devices equipped with a browse function; and a second device transmitting a response message including indication of a browse function to the first device and receiving from the first device a request to connect to a webpage, where the first device selects a device from the list according to a device selection signal and requests connection to the webpage from the selected device.

According to the present invention, in case a webpage is a video URL not played seamlessly in a mobile environment or it is not a dedicated webpage for mobile devices, to browse the corresponding URL page in a better environment, instead of typing the URL into an address window of a PC browser one by one or copying the URL from the address window of the mobile browser and sending the URL as an e-mail for a search of the corresponding URL, the mobile device can be controlled directly to be connected to a webpage corresponding to the URL through a browser included in at least one different terminal connected to a network. Therefore, information received by a mobile device can be played in a better environment without introducing a cumbersome procedure.

The accompanying drawings, which are included to provide a further understanding of this document and constitute a part of this specification, illustrate embodiments of this document and together with the description serve to explain the principles of this document.
FIG. 1 is a conceptual drawing of a remote browsing system according to one embodiment of the present invention;
FIG. 2 is a block diagram of an apparatus for remote browsing according to one embodiment;
FIG. 3 is an embodiment of a device list for an apparatus of FIG. 2;
FIG. 4 is an embodiment where a particular device is selected in FIG. 3;
FIG. 5 is an embodiment displaying devices capable of displaying the URL of the apparatus for remote browsing in FIG. 3; and
FIG. 6 is a diagram of information flow in a method for remote browsing according to one embodiment of the present invention.

The present invention can be modified in various ways and various embodiments of the present invention can be realized; thus, this document illustrates particular embodiments in the appended drawings and detailed description of the embodiment will be provided. However, that is not meant for limiting the present invention to the particular embodiments; rather, it should be understood to include every possible modification, equivalent, or substitute of the present invention which belongs to the technical principles and scope of the present invention.

Terms such as first, second, and so on can be used for describing various components but the components should not be limited by the terms. The terms are introduced only for the purpose of distinguishing one component from the others. For example, a first component may be called a second component without departing from the scope of the present invention and vice versa. The term of and/or indicates a combination of a plurality of related items described or any one of a plurality of related items described.

If a component is said to be "linked" or "connected" to a different component, the component may be directly linked or connected to the different component but a third component may exist to connect the two components even though the two components may be connected directly. On the other hand, if a component is said to be "linked directly" or "connected directly" to another component, it should be interpreted that there is no further component between the two components.

Terms used in this document have been introduced only to describe particular embodiment, not intended to limit the scope of the present invention. Singular expression should be interpreted to include plural expressions unless otherwise stated explicitly. Terms such as "include" or "have" are meant to signify existence of embodied characteristics, numbers, steps, behavior, components, modules, and combinations thereof, which should be understood that possibility of existence or addition of one or more characteristics, numbers, steps, behavior, components, modules, and combinations thereof are not precluded beforehand.

Unless otherwise defined, all the terms used in this document, whether they are technical or scientific, possess the same meaning as understood by those skilled in the art to which the present invention belongs. The terms such as those defined in a dictionary for general use should be interpreted to carry the same contextual meaning in the related technology and they should not be interpreted to possess an ideal or excessively formal meaning.

In what follows, with reference to appended drawings, preferred embodiments of the present invention will be described in more detail. For the purpose of overall understanding of the present invention, the same components of the drawings use the same reference symbols and repeated descriptions for the same components will be omitted.

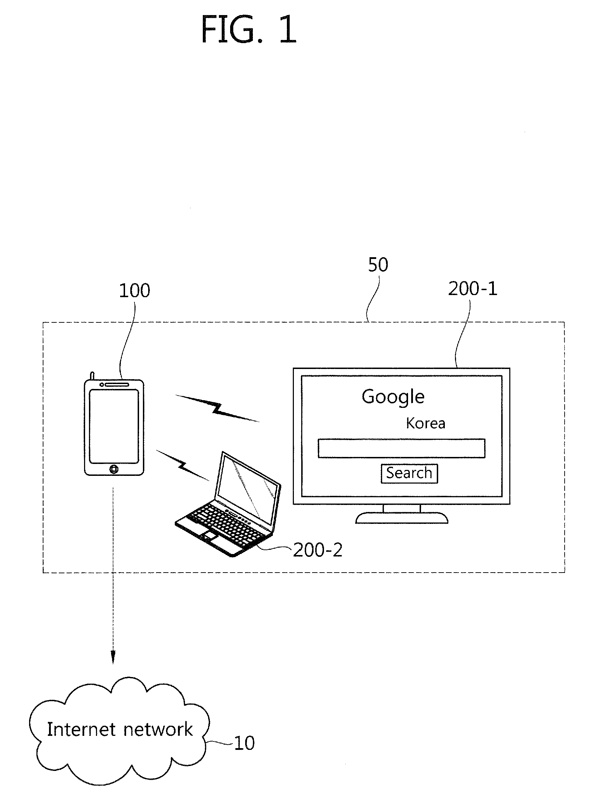

FIG. 1 is a conceptual drawing of a remote browsing system according to one embodiment of the present invention.

As shown in FIG. 1, a system for remote browsing 50 according to one embodiment of the present invention comprises a first device 100 and at least one second device 200-1, 200-2.

As described above, the number of wireless Internet users in a mobile environment is rapidly increasing as the Internet networks 10 supporting wireless Internet are widely deployed and mobile services are diversified. In particular, the amount of wireless Internet usage through smart portable terminals such as smart phones or tablet PCs armed with high performance, applications providing variety and convenience, and splendid graphic interface is ever-increasing. However, the first device 100 indicating a smart portable terminal as described above is characterized by its considerably small display panel compared with the existing PC, notebook, or TV; moreover, all kinds of webpages may not be displayed properly because of the inherent characteristics of mobile devices pursuing miniaturization and light weight.

Therefore, by using the URL (Universal Resource Locator) obtained by the first device 100, the webpage corresponding to the URL can be made to be displayed through at least one second device 200-1, 200-2 belonging to the same network as the first device. The second device may mean a target device displaying the webpage corresponding to the URL requested from the first device. In a conventional method, one has to go through a quite cumbersome procedure, where a webpage corresponding to the URL is connected after the URL obtained by the first device 100 is typed directly into the second device 200-1, 200-2 or the URL is transmitted to the second device 200-1, 200-2 by using an e-mail or a message made by user.

However, according to a system for remote browsing 50 according to one embodiment of the present invention, the first device 100 can control the second device 200-1, 200-2 directly to connect to a webpage corresponding to the URL without going through the cumbersome procedure.

For example, devices equipped with a browser may inform of a browse function through a UPnP (Universal Plug and Play) message; a mobile device, at the time of selecting a URL, selects a device equipped with a browser and controls the selected device to directly access the webpage corresponding to the URL using the URL. In the opposite case, control may be needed in a direction from PC to a mobile device. In case UPnP technology is employed, the whole procedure is simplified since an additional installation or set-up procedure is not needed.

As one embodiment of the present invention, it may be the case that even though the user has received a URL of a recent popular video from his or her friend through a message of a mobile messenger such as kakaotalk, he or she may want to play the video in a TV connected to a home network since playing the video is not well-suited for a mobile environment and the corresponding display screen is too small to watch the video conveniently. In this case, the user may select the URL by using his or her mobile device but make his or her TV connected to a home network play the video corresponding to the URL.

As another embodiment of the present invention, suppose that the user connects to a particular site by using his or her mobile device but the corresponding site does not support a dedicated mobile webpage and since key input in a mobile device is too uncomfortable, he or she may want to browse the corresponding URL by using a PC connected to a home network. In this case, the user may select a URL by using his or her mobile device and carry out browsing the corresponding URL in a notebook connected to the home network.

In one embodiment for carrying out the operation above, a device equipped with a browser belonging to a home network may first of all advertise over a home network through a UPnP discovery message that it is a browser-enabled device. Afterwards, the corresponding device describes functions which can be carried out by the installed browser in a description (for example, Flash, HTML5, Plug-in, and so on). A mobile device can know a list of devices equipped with a browse function at the time of joining a home network. In case a first signal which selects a URL is received, for example, if the user presses the URL displayed on a touch screen for a short time period, the mobile device can browse the corresponding URL. In case a second signal which selects a URL is received, for example, if the user presses the URL displayed on a touch screen for a long time period, the mobile device can display a list of devices equipped with a browser belonging to a home network and select a device from the list and request browsing URL through the corresponding device (for example, My TV, My notebook, My Tablet, and so on). By making a frequently used device assigned by default, the user can avoid bothering to carry out the procedure above.

In what follows, the system for remote browsing 50 according to one embodiment of the present invention will be described in more detail with reference to FIG. 1.

First of all, a first device 100 obtains URL of a particular webpage through the Internet network 10. For example, the user can directly search the URL of a particular webpage through a wireless Internet search (in other words, input from the user) or the user can receive the URL of a particular webpage from another user through a mobile messenger program such as kakaotalk. The URL is not limited to what is obtained through the Internet network 10 but can be obtained through another various communication network in the form of an SMS or MMS message from another user.

In case an obtained URL link is displayed in a URL input window of a browser of the first device 100, in a message display window of a mobile messenger, or in a message display window for SMS or MMS, the user can browse the contents corresponding to the URL by carrying out either of a first and second selection. Here, the first selection corresponds to a conventional selection which requests playing contents corresponding to the URL through a browser of the first device 100 while the second selection corresponds to a remote browsing request which requests browsing contents corresponding to the URL through another device equipped with a browse function.

The first selection may be a conventional selection method for watching contents corresponding to a URL, for example, pressing the URL for a short time period on a touchscreen or pressing an enter key. The first device 100 can generate a conventional browsing request signal according to the first selection of the user. On the other hand, the second selection, being distinguished from the first selection, may correspond to pressing the URL for a long time period on a touchscreen, pressing the URL two times for a short time period, or selecting an icon representing a second device. The second device 100 can generate a remote browsing request signal according to the second selection of the user.

If a remote browsing request signal is generated by the second selection of the user, the first device 100 can display a list of other devices equipped with a browse function connected to a home network. To this end, the first device 100 collects information of second devices through device discovery and based on the information, has to generate a list of devices equipped with a browse function.

For example, the first device 100 can transmit a discovery request message to second devices 200-1, 200-2 connected to the same network to which the first device 100 is connected. The request is intended for generating a device list from which the first device 100 can make a selection. The second devices 200-1, 200-2 which have received the discovery request message, in response to the discovery request message, can each transmit to the first device 100 a response message including indication of a browse function.

The procedure above only has to be carried out properly, according to the operating environment of the procedure, before a list of devices equipped with a browse function is generated. For example, the procedure can be carried out when the network is established, the first device 100 is connected to the network, individual second devices are connected to the network after the first device 100 is connected to the network, or a second selection signal is input to the first device 100.

The network may refer to a local network such as a home network. In other words, the second devices 200-1, 200-2 connected to the same network to which the first device 100 is connected may be the devices belonging to the same home network. However, it should be noted that the second devices do not necessarily connect to the same network to which the first device 100 is connected; in case data transmission is possible between networks through a particular communication means, a device connected to a network different form the network to which the first device 100 is connected may also be considered as a second device.

The first device 100 can display a list of devices equipped with a browse function based on the response message. Afterwards, the first device 100 can select a device from the list according to a device selection signal and transmit a connection request message to the selected device. Here, the connection request message can include URL input through the first browser and include a signal requesting connection to a webpage corresponding to the URL by using a second browser installed in the selected device.

To describe with reference to FIG. 1, suppose the user has found a URL at which the user can watch a video of "highlights of EURO 2012 final match" through wireless Internet search by using the first device 100, which is a mobile device. Further suppose that the video of "highlights of EURO 2012 final match" provided at the webpage corresponding to the URL is streamed in the form of flash video and the first device 100 does not support the flash video format.

In this case, the user carries out a second selection by using the first device 100 and a remote browsing request signal is generated according as the second selection of the user is carried out, the first device 100 can display a list of devices equipped with a browse function.

To this purpose, the first device 100 can transmit a discovery request message to second devices 200-1, 200-2 connected to the same network to which the first device 100 is connected, which are smart TV 200-1 and notebook 200-2. The second devices including the smart TV 200-1 and the notebook 200-2, in response to the discovery request message, can each transmit to the first device 100 a request message including indication of a browse function.

The first device 100 can display the smart TV 200-1 and notebook 200-2 as a list of devices equipped with a browse function based on the response message. Here, according to a device selection signal, for example, the smart TV 200-1 can be selected and the first device 100 can transmit a connection request message to the smart TV 200-1. At this time, the connection request message includes URL of the video of "highlights of EURO 2012 final match" input through the first browser and includes a signal requesting connection to the webpage for the video of "highlights of EURO 2012 final match" corresponding to the URL by using a second browser installed in the smart TV 200-1, which is the selected device.

The smart TV 200-1, receiving the connection request message, connects to the URL address at which the user can watch the video of "highlights of EURO 2012 final match" by using the URL included in the connection request message. The smart TV supports the flash video format and the user can watch a lively video in a larger screen.

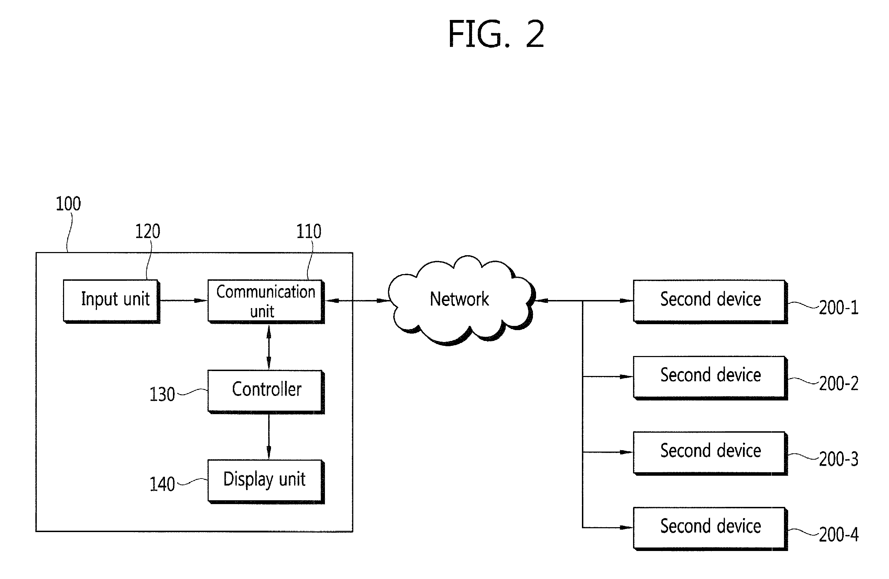

FIG. 2 is a block diagram of an apparatus for remote browsing according to one embodiment.

As shown in FIG. 2, an apparatus for remote browsing 100 equipped with a first browser according to one embodiment of the present invention comprises a communication unit 100, an input unit 120, a controller 130, and a display unit 140. In the following, an apparatus for remote browsing according to one embodiment of the present invention will be described in more detail with reference to FIG. 2.

In case the contents of a webpage corresponding to URL obtained by the first device 100 cannot be played in the first device 100 or the contents are to be played in a better environment, the first device 100 can connect to the webpage corresponding to the URL through at least one of second devices 200-1, 200-2, 200-3, 200-4 connected to the first device 100 through a network.

To carry out the operation above, the communication unit 110 first transmits a discovery request message to the second devices 200-1, 200-2, 200-3, 200-4 connected to a network. This is intended for the first device 100 to figure out devices connected to a network for the purpose of generating a list of second devices through which to display a webpage corresponding to the URL of the first device 100.

The second devices 200-1, 200-2, 200-3, 200-4 which have received the discovery request message, in response to the discovery request message, can each transmit to the communication unit 110 a response message including indication of a browse function. In case the devices are connected to a network, too, separate browsers may not be supported as in the case where only video streaming is supported through short range communication. Therefore, the second devices 200-1, 200-2, 200-3, 200-4 belonging to a network can each provide information indicating a browse function and transmit to the communication unit 110 a response message including indication of the browse function.

The display unit 140, in response to a remote browsing request signal requesting playing of URL contents employing other devices, can display a list of devices equipped with a browse function among a plurality of devices connected to a network. At this time, the display unit 140 may display a list of devices equipped with a browse function based on a response message received by the communication unit 110. In other words, the display unit 140 can check whether a browse function is supported by analyzing a response message transmitted by the second devices 200-1, 200-2, 200-3, 200-4 and include in the list of devices only the devices equipped with the browse function.

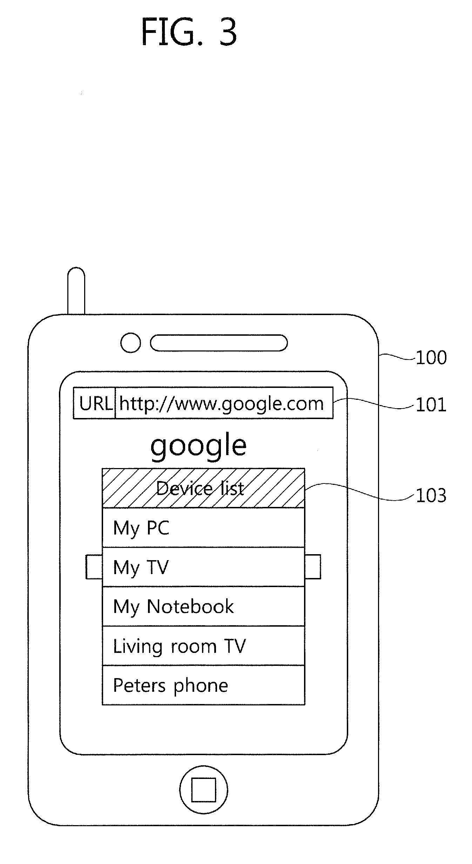

FIG. 3 is an embodiment of a device list for an apparatus of FIG. 2. As shown in FIG. 3, the apparatus for remote browsing 100 according to one embodiment of the present invention can input URL into a URL input window 101 and display a webpage corresponding to the URL. At this time, in case a webpage corresponding to the URL is to be displayed through at least one of second devices connected to a network, the user can carry out a second selection and if the first device 100 generates a remote browsing request signal according to the second selection of the user, a list of devices 103 equipped with a browse function among devices connected to the network can be displayed based on the procedure of transmitting a discovery request message and receiving a response message described above.

Here, the device list 103 can be displayed in the form of a pop-up window or configured in the form of an independent menu utilizing screen switching. Each device in the list can be displayed in the form of an icon image, which indicates that the device list 103 is not limited to specific display forms.

Again referring to FIG. 2, a response message received by the communication unit 110 may include capability information of a browser installed in a device transmitting the response message. As described above, it is not possible for a particular browser to display all kinds of webpages. Webpages can be represented according to various kinds of formats; in the case of video, different encoding techniques may be used for the video. In addition, there may be cases where high resolution images such as HD (High Definition), U-HD (Ultra-High Definition) images may not be properly displayed.

Therefore, the response message can include capability information of a browser of each of the second devices 200-1, 200-2, 200-3, 200-4 transmitting the response message. Here, the capability information can be characterized to include at least one of a webpage display method, information about whether plug-ins are supported, and resolution. In other words, the capability information can indicate whether a web standard such as HTML5 is supported as a webpage display method and also indicate whether plug-ins such as Javascript, flash, acrobat reader, and so on are supported. As described above, in the case of video, the capability information may further include information about resolution supported by each of the browsers for determining whether playing of high resolution images is supported.

If the communication unit 110 receives a response message including capability information as described above, the controller 130, based on the capability information of a browser, can determine whether a device transmitting the response message is capable of displaying a webpage corresponding to the URL. The controller 130 can carry out comparison of capability information included in the response message with at least one of a webpage display method, information about whether plug-ins are supported, and resolution required for displaying the contents of a webpage corresponding to the URL; and determine based on the comparison result whether the devices transmitting the response message are capable of displaying a webpage corresponding to the URL.

In the following, the display unit 140 further displays a list of devices capable of displaying the webpage based on a determination result of the controller 130. In addition to a list of devices equipped with a browse function, by further displaying a list of devices capable of displaying the contents of a webpage effectively, the display unit 140 can help the user select a device through which to display a webpage corresponding to the URL. Meanwhile, if the communication unit 110 receives a response message including capability information, the display unit 140 can display on the list of devices equipped with a browse function the capability information corresponding to each of the devices. Even when the controller 130 does not determine whether a device transmitting the response message is capable of displaying a webpage corresponding to the URL message, if the display unit 140 displays the capability information corresponding to each of the devices on the device list, the user is allowed to directly select a device capable of displaying the webpage with reference to the capability information.

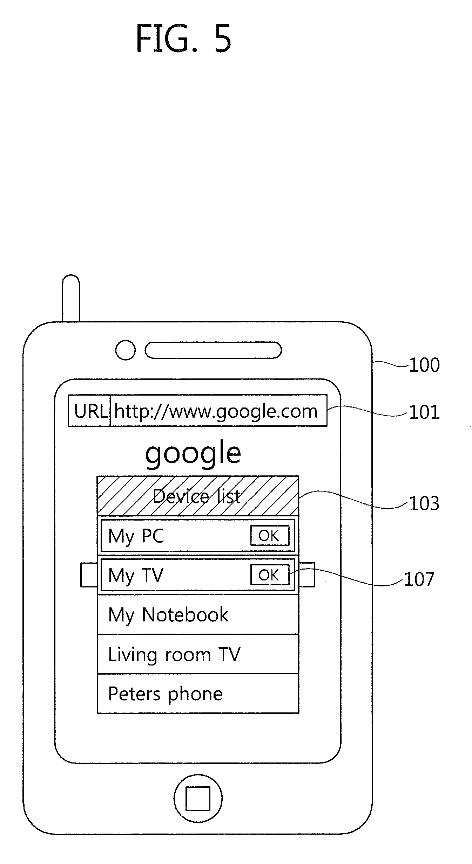

FIG. 5 is an embodiment displaying devices capable of displaying the URL of the apparatus for remote browsing in FIG. 3. With reference to FIG. 5, a device list 103 includes My PC, My TV, My Notebook, living room TV, and Peters phone. Here, the URL input window of the first device 100 can receive URL obtained through the first device 100. Here, it is assumed that the webpage corresponding to the URL displays the video of "highlights of EURO 2012 final match" and the contents are played according to flash video format. Therefore, to display the contents properly, the browser of the devices has to support the flash video format.

Suppose only My PC and My TV among devices of My PC, My TV, My Notebook, living room TV, and Peters phone support flash type video play. In this case, a response message transmitted by the My PC and My TV to the first device 100 includes capability information indicating support of flash video format. The controller 130, based on the capability information, determines that the My PC and My TV are capable of displaying a webpage corresponding to the URL. Therefore, the display unit 140 can additionally display a list of devices capable of displaying the webpage based on the determination, including the My PC and My TV.

For example, as shown in FIG. 5, by additionally displaying an OK mark on the device list 103 over the area of My PC and My TV capable of displaying the webpage, the devices are indicated to be capable of displaying the webpage. The user can then select a device to display the webpage from the My PC and My TV found appropriate for displaying the webpage.

Again referring to FIG. 2, the controller 130 can select a device from the list according to a device selection signal. The device selection signal can be received from the input unit 120. The input unit 120 may be an input device of touchscreen type positioned on a device list screen displayed by the display unit 140 or a physical button prepared separately. Based on a user interface of the input unit 120, the user can select at least one from the displayed device list and the input unit 120 can deliver a device selection signal representing the selected device to the controller 130 via the communication unit 110. The controller 130 can select a particular device from the list based on the device selection signal.

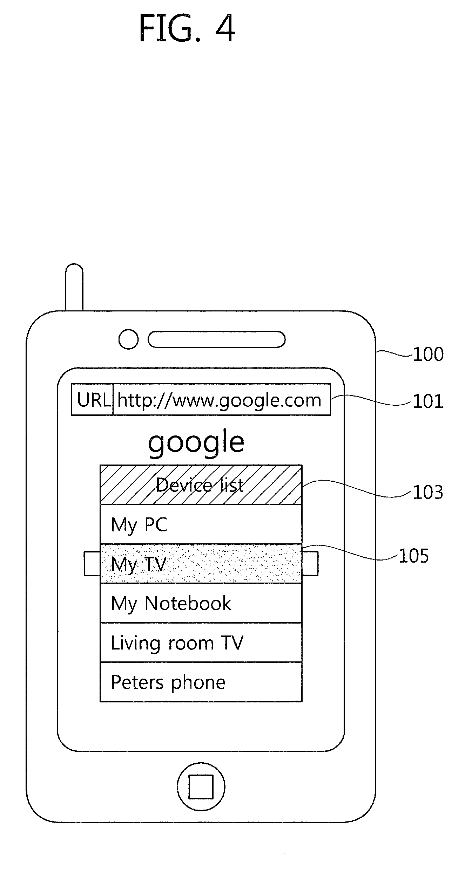

FIG. 4 is an embodiment where a particular device is selected in FIG. 3. As shown in FIG. 4, if the user attempts to select My TV 105 from the device list 103 displayed by the display unit 140, the user can select the My TV 105 through the input unit 120 and the input unit 120 can transmit to the controller 120 through the communication unit 110 a device selection signal including information indicating that the My TV 105 has been selected. Therefore, the controller 130 can select the My TV 105.

Similarly, the controller 130 can be so configured that it can select a predetermined default device if the device selection signal is not received over a predetermined time period. In other words, since selecting a device each time may be cumbersome, the user may set up a particular device as a default device beforehand together with a predetermined time period for selection; if a device selection signal is not received from the input unit 120 for more than the predetermined time period, the default device is automatically selected, thereby increasing user convenience.

If the controller 130 selects a device, the communication unit 110 can request connecting to a webpage by using a browser installed in the selected device. In other words, the communication unit 110 can transmit to the selected device a connection request message including URL input through the first browser and requesting connection to a webpage corresponding to the URL by using a second browser installed in the selected device. Afterwards, the selected device can connect to a webpage corresponding to the URL by using the second browser and the user can then watch the contents of the webpage corresponding to the URL in a more comfortable setting.

Meanwhile, the webpage corresponding to the URL may be the contents provided according to particular information received from the user rather than the contents for simple watching. Since key input in a mobile device such as the first device 100 is considerably restricted even though display of the contents may be supported, the user may want to connect to a webpage corresponding to particular URL by using a PC, which provides a lot more convenient key input interface.

Therefore, the communication unit 110 may receive more information required for displaying a webpage corresponding to the URL from a device which has received the connection request message. In case the device which has received the connection request message is equipped with a keyboard as found in a PC or notebook, the user convenience is increased since key input can be made more easily.

Meanwhile, since there may be cases where the first device tries to connect directly to a webpage corresponding to the URL, display of a device list as described above may be carried out selectively. For example, the display unit 140 can display a list of devices equipped with the browse function in case the communication unit 110 receives a remote browsing request signal. At this time, the input unit 120 can transmit the remote browsing request signal to the communication unit 110 in case the user presses a means for moving to the URL for more than a predetermined time period.

To illustrate with reference to FIG. 3, if the user inputs a particular URL in the URL input window 101 of the first device 100 and attempts to connect to a webpage according to the URL directly from the first device 100, the user can make a light touch on a means for moving to the URL (for example, the URL button of FIG. 3) as a first selection. If the user attempts to display a webpage according to the URL through a different device connected to the network, the user may press a means for moving to the URL (for example, the URL button of FIG. 3) for more than a predetermined time period as a second selection. In the latter case, the input unit 120 can generate a remote browsing request signal and transmit it to the communication unit 110. If the communication unit 110 receives the remote browsing request signal, the display unit 140 can display a list of devices 103 equipped with a browse function.

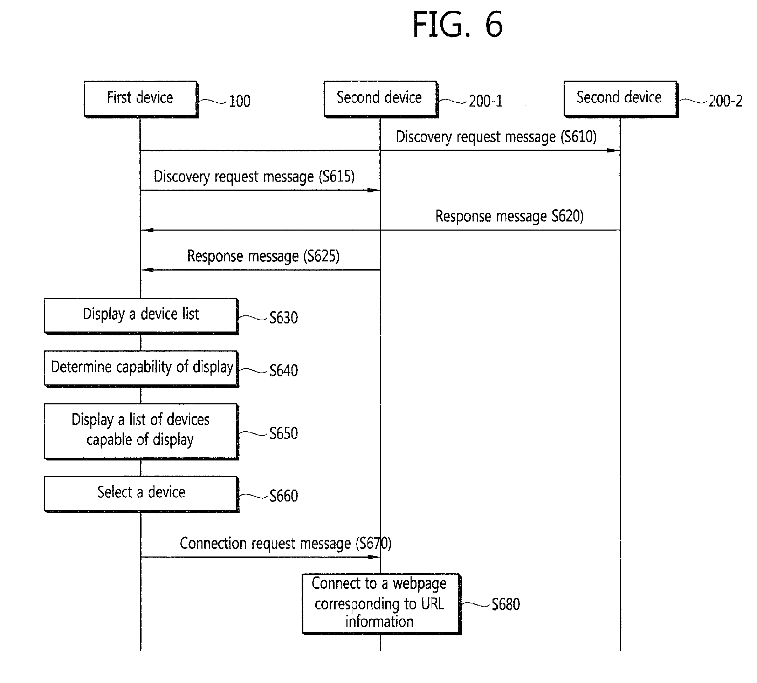

FIG. 6 is a diagram of information flow in a method for remote browsing according to one embodiment of the present invention. As shown in FIG. 6, in a method for remote browsing carried out by a first device 100 equipped with a first browser according to one embodiment of the present invention, the first browser 100 first of all transmits a discovery request message to devices 200-1, 200-2 devices connected to a network 610, 615. Next, in response to the discovery request message, the first device 100 receives from each of the devices 200-1, 200-2 a response message including indication of a browse function 620, 625.

Receiving the response message, the first device 100 displays a list of devices equipped with a browse function among devices connected to the network based on the response message 630.

The response message may include capability information of a browser of a device transmitting the response message. In case the response message includes capability information of a browser of a device transmitting the response message, the first device 100 can determine based on the capability information of the browser whether the device transmitting the response message is capable of displaying a webpage corresponding to the URL 640. Also, the first device 100, based on the determination, displays a list of devices capable of displaying the webpage 650. Here, the capability information can include at least one of a webpage display method, information about whether plug-ins are supported, and resolution.

Afterwards, the first device 100 selects a device from the list according to a device selection signal 660. If a device is selected, the first device 100 transmits to the selected device a connection request message including URL received through the first browser and requesting connection to a webpage corresponding to the URL by using a second browser installed in the selected device 670.

At this time, the displaying a list (step 630) makes the first device 100 display a list of devices equipped with the browse function in response to a remote browsing request signal. Also, the remote browsing request signal is generated when the user presses a means for moving to the URL in the first device 100 for more than a predetermined time period.

In addition, the selecting a device (step 660) can be configured such that a predetermined default device is selected when the device selection signal is not received for more than a predetermined time period.

Receiving a connection request message, the second device 200-1 can connect to a webpage corresponding to the URL by using a second browser installed in the second device 200-1. Similarly, depending on situations, the URL and the information required by the webpage corresponding to the URL can be input through the second device 200-1. In this case, the first device 100 can receive the information required by the webpage corresponding to the URL from the device 200-1 which has received the connection request message.

Detailed operation of a method for remote browsing according to one embodiment of the present invention is carried out according to the operation of an apparatus for remote browsing described above.

According to the present invention, in case a webpage is a video URL not played seamlessly in a mobile environment or it is not a dedicated webpage for mobile devices, to browse the corresponding URL page in a better environment, instead of typing the URL into an address window of a PC browser one by one or copying the URL from the address window of the mobile browser and sending the URL as an e-mail for a search of the corresponding URL, the mobile device can be controlled directly to be connected to a webpage corresponding to the URL through a browser included in at least one different terminal connected to a network. Therefore, information received by a mobile device can be played in a better environment without introducing a cumbersome procedure.

**DESCRIPTION OF SYMBOLS**

| | | | |
|---|---|---|---|
| 10: | Internet network | 50: | remote browsing system |
| 100: | apparatus for remote browsing, first device | | |
| 101: | URL input window | 103: | device list |
| 105: | selected device | 107: | device capable of connection |
| 110: | communication unit | 120: | input unit |
| 130: | controller | 140: | display unit |

## Claims

1. A method for remote browsing, comprising:
displaying a list indicating at least one device equipped with a browse function among a plurality of devices connected to a network;
selecting a device from the list according to a device selection signal; and
requesting connection to a webpage by using a browser installed in the selected device.

2. The method of claim 1, wherein the requesting connection to a webpage comprises receiving a URL from a user input; and
Transmitting, to the selected device, a connection request message including the received URL and requesting connection to a webpage corresponding to the URL by using a browser installed in the selected device.

3. The method of claim 1 or 2, further comprising:
transmitting a discovery request message to devices connected to a network; and
receiving response messages including information about whether the browse function is supported from each of the devices in response to the discovery request message, and
wherein displaying the list comprises displaying, based on the response message, the list indicating at least one device equipped with the browse function.

4. The method of claim 3, wherein the response message includes capability information of a browser of a device transmitting the response message.

5. The method of claim 4, further comprising:
determining based on capability information of the browser whether a device transmitting the response message is capable of displaying a webpage corresponding to the URL; and
displaying a list indicating at least one device capable of displaying the webpage based on the determination.

6. The method of any one of claims 1 to 5, wherein displaying the list comprising:
receiving a remote browsing request signal; and
in response to the remote browsing request signal, displaying a list indicating at least one device equipped with the browsing function.

7. The method of claim 6, wherein the remote browsing request signal is generated when the user presses a means for moving to the webpage for more than a predetermined time period.

8. The method of any one of claims 1 to 7, wherein selecting the device comprises selecting a predetermined default device in case the device selection signal is not received for more than a predetermined time period.

9. The method of claim 4, wherein the capability information includes at least one of a webpage display method, information about whether plug-ins are supported, and supportable resolution.

10. The method of any one of claims 1 to 9, further comprising:
Receiving, from the selected device, information requested by the webpage.

11. An apparatus for remote browsing, comprising:
a display unit displaying a list indicating at least one device equipped with a browse function among devices connected to a network;
a controller selecting a device from the list according to a device selection signal; and
a communication unit requesting connection to a webpage by using a browser installed in the selected device.

12. The apparatus of claim 11, wherein the communication unit includes URL received from a user input and transmits to the selected device a connection request message requesting connection to a webpage corresponding to the URL by using a browser installed in the selected device.

13. The apparatus of claim 11 or 12, wherein the communication unit transmits a discovery request message to devices connected to a network and in response to the discovery request message, receives from the devices a response message including information about whether a browse function is supported,
while the display unit displays based on the response message the list indicating at least one device equipped with the browse function.

14. The apparatus of claim 13, wherein the response message includes capability information of a browser of a device transmitting the response message.

15. A system for remote browsing, comprising:
a first device transmitting a discovery request message to devices connected to a network and receiving from the devices a response message including indication of a browse function in response to the discovery request message and based on the response message, displaying a list of devices equipped with a browse function; and
a second device transmitting a response message including indication of a browse function to the first device and receiving from the first device a request to connect to a webpage,
where the first device selects a device from the list according to a device selection signal and requests connection to the webpage from the selected device.
